# EUROPÄISCHE PATENTSCHRIFT

(11) **EP 1 905 510 B1**
(45) Veröffentlichungstag und Bekanntmachung des Hinweises auf die Patenterteilung: **02.03.2011**
(21) Anmeldenummer: 07113900.0
(22) Anmeldetag: 07.08.2007
(51) Int. Cl.: B01J 23/90, B01J 38/12, C01B 3/38, H01M 8/04, H01M 8/06

(54) **Brennstoffzellensystem und zugehöriges Betriebsverfahren**
Fuel cell system and corresponding operating method
Système de piles à combustible et son procédé de fonctionnement

(30) Priorität: 29.09.2006 DE 102006046676
(43) Veröffentlichungstag der Anmeldung: 02.04.2008
(73) Patentinhaber: J. Eberspächer GmbH & Co. KG, 73730 Esslingen (DE)
(72) Erfinder: Kienzle, Birgit, 89073 Ulm (DE); Emelianov, Petr, 74076 Heilbronn (DE)
(74) Vertreter: BRP Renaud & Partner

(56) Entgegenhaltungen:
- EP-A- 1 513 207
- EP-A- 1 557 896
- DE-A1-102004 059 647

## Beschreibung

Die vorliegende Erfindung betrifft ein Brennstoffzellensystem, insbesondere für ein Kraftfahrzeug. Die Erfindung betrifft außerdem ein Verfahren zum Regenerieren eines derartigen Brennstoffzellensystems.

Brennstoffzellensysteme umfassen üblicherweise eine Brennstoffzelle zur Stromerzeugung aus Oxidatorgas und Brenngas die neben einem Anoden-/Kathodeneingang und einem Anoden/Kathodenausgang wenigstens einen Stromanschluss aufweisen. Darüber hinaus umfassen bekannte Brennstoffzellensysteme üblicherweise einen Reformer zur Brenngaserzeugung aus Oxidatorgas und Kraftstoff, der an einem Brenngasausgang über eine Brenngasleitung mit dem Anodeneingang der Brennstoffzelle verbunden ist. Der Reformer generiert dabei ein wasserstoff- und kohlenmonoxidhaltiges Reformat oder Brenngas, wozu er beispielsweise mit Hilfe eines Katalysators ein fettes Gemisch aus Oxidatorgas und Kraftstoff mittels partieller Oxidation umsetzt. Hierbei können sich Partikel, insbesondere Rußpartikel, auf dem Katalysator ablagern. Dabei wird bei einer zunehmenden Partikel- bzw. Rußbeladung des Katalysators dessen Durchströmungswiderstand erhöht, die aktive Katalysatoroberfläche belegt und dadurch die Funktionsfähigkeit beeinträchtigt. Des weiteren entzünden sich die Rußpartikel bei Anwesenheit von Sauerstoff schlagartig mit hoher Temperatur und führen aufgrund dessen zu Verschmelzungen des Katalysatorträgers. Um dies zu vermeiden, müssen die Partikel- bzw. der Ruß nach dem Betrieb abgebrannt werden.

Eine Regenerierung des Katalysators muss dabei jedoch bei bekannten Brennstoffzellensystemen im abgeschaltenen Zustand und bei Unterschreiten einer bestimmten Temperatur der Brennstoffzelle anodenseitig erfolgen, da zur Oxidation des Rußes Sauerstoff benötigt wird, der ab einem gewissen Volumenstrom eine starke Schädigung bis zur Zerstörung der Brennstoffzelle auslösen kann. Ein Abschalten des Brennstoffzellensystems kann dabei jedoch einen Betriebsablauf erheblich stören.

DE 10 2004 059647 A1 offenbart ein Verfahren zum Regenerieren eines Reformers welches während der Regenerierungsphase den Lambda-Wert erhöht indem es die Zufuhr von Brennstoff verringert. Die Verringerung der Brennstoffzufuhr wird in Abhängigkeit der Reformertemperatur beendet um eine Überhitzung des Reformers und der Brennstoffzelle durch den Abbrand des auf dem Katalysator abgelagerten Rußes zu Verhindern.

Die vorliegende Erfindung beschäftigt sich mit dem Problem, für ein Brennstoffzellensystem einen Weg zur Regeneration des Katalysators aufzuzeigen, bei dem die Regenerierung auch während des Betriebs des Brennstoffzellensystems möglich ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Temperatur im Katalysator während des Regenerationsprozesses unterhalb einer den Katalysator schädigenden Grenztemperatur zu halten, indem einerseits ein, die Temperatur des Katalysators reduzierender Anteil an Rezirkulationsgas und andererseits ein Lambda-Wert erhöht wird. Außerdem erfolgt die beschriebene Regeneration vorzugsweise bei möglichst niedriger Reformer- und Brennstoffzellenleistung, idealerweise kurz vor Beendigung des Betriebes des Systems, in einer Stopp-Prozedur, in welcher die Brennstoffzelle langsam im Betrieb abgekühlt wird. Durch die daraus resultierende gegenteilige Temperaturbeeinflussung durch einerseits des Rezirkulationsgas und andererseits des erhöhten Lambda-Werts kann somit eine für den Katalysator unschädliche Grenztemperatur eingehalten werden, bei welcher gleichzeitig ein Abbrand der den Katalysator belasteten Rußpartikeln erfolgen kann, einerseits durch den erhöhten Wasserdampfanteil im Rezirkulationsgas, andererseits eine Oxidation der Rußpartikel durch den erhöhten Sauerstoffanteil im Eduktstrom. Der erhöhte Anteil an rückgeführtem Rezirkulationsgas, welches vorzugsweise mittels einer Wärmeübertragereinrichtung gekühlt wird, um dann mit der entsprechend niedrigeren Temperatur gefördert werden zu können, führt zu einer Inertisierung der Reaktion im Katalysator, wodurch dieser eine deutliche Abkühlung erfährt. Dies kann nun kompensiert werden mit einer Erhöhung des Lambda-Werts, d.h. mit einer Erhöhung eines Oxidatorgehaltes eines Oxidator/Kraftstoff-Verhältnis, wodurch die dadurch erzeugte exotherme Reaktion eine Anhebung der Katalysatortemperatur bewirkt. Beide Temperatureffekte zusammengenommen erlauben dabei einerseits den vorzugsweise fast vollständigen Abbrand der im Katalysator angelagerten Rußpartikel und andererseits eine Begrenzung der im Katalysator auftretenden Temperatur, welche unterhalb der den Katalysator schädigenden Grenztemperatur liegt. Da trotz des erhöhten Lambda-Wertes weiterhin vom Katalysator Brenngas erzeugt und dieses einem Anodeneingang der Brennstoffzelle zugeführt werden kann, kann auch die Brennstoffzelle weiterhin betrieben werden, bzw. die Leistung langsam reduziert werden. Durch den erhöhten Anteil an Rezirkulationsgas kann auch die Brennstoffzelle regeneriert werden. Hierbei wird vorzugsweise der im Rezirkulationsgas enthaltene Wasserdampfanteil bzw. der darin enthaltene Sauerstoff zur Oxidation der kohlenstoffhaltigen Rußpartikel im Katalysator genutzt. Der Wasserdampf wird dabei zusammen mit dem Kohlenstoff in Wasserstoff und Kohlendioxid umgewandelt. Weiter ist denkbar, dass die Erhöhung des Lambda-Werts und damit die Erhöhung des Sauerstoffanteils eine Oxidation der kohlenstoffhaltigen Rußpartikel in Kohlendioxid bewirkt. Dabei ist der Gesamtoxidatoranteil so begrenzt, dass nach Möglichkeit kein Sauerstoff den Reformer in Richtung Anodeneingang der Brennstoffzelle verlässt und diese schädigen kann.

Zweckmäßig ist eine Wärmeübertragereinrichtung vorgesehen, welche in einer Kathodenluftzufuhrleitung der Brennstoffzelle angeordnet ist. Diese Wärmeübertragereinrichtung entzieht insbesondere beim Regenerationsbetrieb dem aus dem Anodenausgang der Brennstoffzelle stammenden Rezirkulationsgas Wärme, so dass dieses gekühlt gefördert und der Gemischbildungseinrichtung des Reformers zugeführt werden kann und gleichzeitig die Kathodenluft vor der Zuführung in die Brennstoffzelle erwärmt. Diese Erwärmung führt zu einem besseren Wirkungsgrad der Brennstoffzelle.
Bei einer vorteilhaften Weiterbildung der erfindungsgemäßen Lösung ist die Brennstoffzelle als Hochtemperatur-Brennstoffzelle ausgebildet. Derartige Hochtemperatur-Brennstoffzellen weisen üblicherweise eine Betriebstemperatur von bis zu 900° auf, wobei ein Elektrolyt üblicherweise aus einem festen, keramischen Werkstoff, beispielsweise yttriumdotiertem Zirkoniumdioxid besteht, der in der Lage, ist Sauerstoffionen zu leiten, für Elektronen jedoch isolierend wirkt. Eine Kathode einer derartigen Brennstoffzelle ist ebenfalls üblicherweise aus einem keramischen Werkstoff ausgebildet, der für Ionen und für Elektronen gleichermaßen leitfähig ist. Von besonderem Vorteil bei derartigen Brennstoffzellen ist ein relativ hoher Systemwirkungsgrad von ca. 55% bis 65%.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

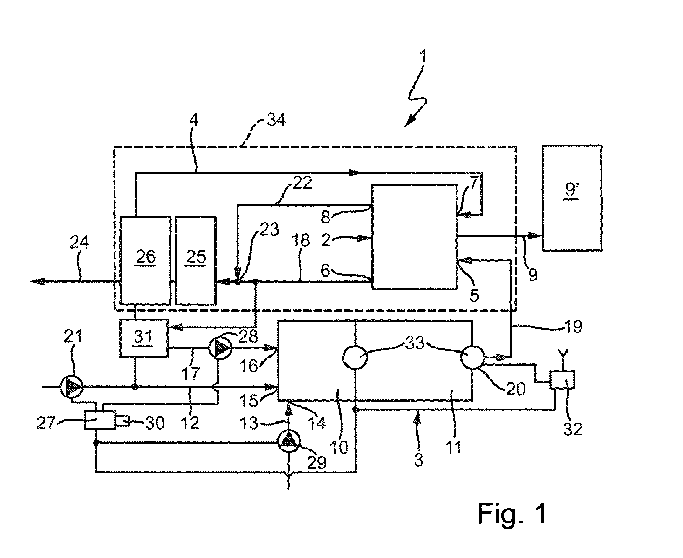

Die einzige Fig. 1 zeigt eine schematische, schaltplanartige Prinzipdarstellung eines erfindungsgemäßen Brennstoffzellensystems.

Entsprechend Fig. 1 umfasst ein Brennstoffzellensystem 1, welches in einem Kraftfahrzeug angeordnet sein kann, zumindest eine Brennstoffzelle 2 und einen Reformer 3. Die Brennstoffzelle 2 dient zur Erzeugung von Strom, den sie in bekannter Weise aus einem Oxidatorgas und einem Brenngas erzeugt. Die Brennstoffzelle 2 kann dabei beispielsweise als Festkörper-Brennstoffzelle (SOFC) und vorzugsweise als Hochtemperatur-Brennstoffzelle ausgebildet sein. Für die Stromerzeugung wird die Brennstoffzelle 2 kathodenseitig über eine Kathodenzuführleitung 4 mit dem Oxidatorgas versorgt, welches beispielsweise durch Luft oder reinen Sauerstoff gebildet ist. Außerdem wird die Brennstoffzelle 2 im Betrieb anodenseitig mit Brenngas versorgt, welches wasserstoff- und kohlenmonoxidhaltig ist. Dementsprechend weist die Brennstoffzelle 2 einen Anodeneingang 5, einen Anodenausgang 6, einen Kathodeneingang 7, einen Kathodenausgang 8 sowie zumindest einen elektrischen Anschluss 9 auf. Über den wenigstens einen Anschluss 9 kann ein elektrischer Verbraucher 9' an die Brennstoffzelle 2 bzw. an das Brennstoffzellensystem 1 angeschlossen werden.

Bei einem in einem Kraftfahrzeug angeordneten Brennstoffzellensystem 1 handelt es sich beim elektrischen Verbraucher 9' vorzugsweise um für den normalen Fahrbetrieb des Fahrzeugs nicht erforderliche Verbraucher 9'. Vielmehr dienen diese Verbraucher 9' dem Fahrzeugführer zur Komfortsteigerung, wenn das Fahrzeug ruht, also wenn eine Brennkraftmaschine des Fahrzeugs ausgeschaltet ist. Das Brennstoffzellensystem 1 stellt im Fahrzeug demnach eine motorunabhängige Stromversorgung bereit, wobei die Verbraucher 9' beispielsweise eine Klimaanlage, ein Mediengerät oder eine Batterie sein können.

Der Reformer 3 dient zur Erzeugung des wasserstoffhaltigen Brenngases aus Oxidatorgas vorzugsweise aus Luft und aus Kraftstoff, vorzugsweise aus Kohlenwasserstoffen. Dabei wird üblicherweise als Kraftstoff zur Versorgung des Reformers 3 derjenige Kraftstoff verwendet, der in dem mit dem Brennstoffzellensystem 1 ausgestatteten Fahrzeug zur Versorgung einer Brennkraftmaschine ohnehin zur Verfügung steht.

Der Reformer 3 umfasst eine Gemischbildungseinrichtung 10 und sich unmittelbar stromab daran anschließend einen Katalysator 11. In der Gemischbildungseinrichtung 10 erfolgt die Bildung eines Gemisches aus dem Oxidatorgas und dem Kraftstoff. Dabei wird das Oxidatorgas über eine Oxidatorleitung 12 und der Kraftstoff über eine Kraftstoffleitung 13 der Gemischbildungseinrichtung 10 zugeführt. Dabei sind an der Gemischbildungseinrichtung 10 ein Kraftstoffeingang 14 und ein Oxidatoreingang 15 vorgesehen. Desweiteren ist noch ein Anodenabgaseingang 16 vorgesehen, welcher die Gemischbildungseinrichtung 10 über eine Rezirkulationsleitung 17 mit aus dem Anodenausgang 6 stammendem Anodenabgas beliefern kann. Die Rezirkulationsleitung 17 zweigt dabei aus einer Anodenabgasleitung 18 ab.

Der Katalysator 11 dient zur Umsetzung des von der Gemischbildungseinrichtung 10 bereit gestellten Gemischs in wasserstoff- und kohlenmonoxidhaltiges Brenngas. Hierzu weist der Katalysator 11 ein zur Herstellung eines derartigen Brenngases geeignetes Katalysatormaterial auf. Stromab des Katalysators 11 ist an diesen eine Brenngasleitung 19 angeschlossen, welche einen Brenngasausgang 20 des Reformers 3 mit dem Anodeneingang 5 der Brennstoffzelle 2 verbindet.

Zur Versorgung der Brennstoffzelle 2 und des Reformers 3 mit Oxidatorgas kann noch ein Gebläse oder eine Pumpe 21 vorgesehen sein, welche beispielsweise über die Kathodenzuführleitung 4 an den Kathodeneingang 7 und über die Oxidatorzuführleitung 12 an den Oxidatoreingang 15 angeschlossen ist.

An den Kathodenausgang 8 ist eine Kathodenabgasleitung 22 zum Abführen von Kathodenabgas aus der Brennstoffzelle 2 angeschlossen, während an den Anodenausgang 6 die Anodenabgasleitung 18 angeschlossen ist. Die Kathodenabgasleitung 22 ist bei 23 mit der Anodenabgasleitung 18 zusammengeführt, die ab dieser Anschlussstelle 23 eine gemeinsame Brennstoffzellenabgasleitung 24 zum Abführen von Anoden- und Kathodenabgas bildet. Die Anschlussstelle 23 ist dabei kurz vor bzw. an einem Restgasbrenner 25 oder innerhalb eines Restgasbrenners 25 angeordnet, welcher dazu dient, Anoden- und Kathodenabgas zu verbrennen, um dadurch nicht oder nicht vollständig umgesetzte Reste des Brenngases umzusetzen. Hierdurch werden zum einen die Emissionswerte des Brennstoffzellensystems 1 verbessert und zum anderen kann zusätzlich Wärme freigesetzt werden, welche in einem Wärmeübertrager 26 das dem Kathodeneingang 7 zugeführte Oxidatorgas erwärmt. Der Wärmeübertrager 26 ist dabei stromab des Restgasbrenners 25 angeordnet und in die Kathodenluftzuführungsleitung 4 eingebunden.

Desweiteren kann das Brennstoffzellensystem 1, wie in Fig. 1 gezeigt, mit einer weiteren Wärmeübertragungseinrichtung 31 ausgestattet sein, welche zugleich in die Kathodenluftzuführungsleitung 4 und in die Rezirkulationsleitung 17 eingebunden ist.

Ferner ist durch eine unterbrochene Linie eine Isolationsbox 34 angedeutet, die thermisch isolierend ausgestaltet ist, bevorzugt bei einer Hochtemperatur-Brennstoffzelle zur Anwendung kommt und in der die im Betrieb heißen Komponenten, wie z.B. die Brennstoffzelle 2, der Restgasbrenner 25 und optional der Wärmeübertrager 26, angeordnet sind.

Erfindungsgemäß weist das Brennstoffzellensystem 1 außerdem eine Steuereinrichtung 27 auf, die so ausgebildet ist, dass sie während eines Regenerationsbetriebs einen Anteil an in den Reformer 3 zurückgeführtem Rezirkulationsgas und den Lambda-Wert erhöht. Die Steuereinrichtung 27 ist dazu vorzugsweise mit dem Gebläse 21, mit einer Rezirkulationsgaszuführungseinrichtung 28 und mit einer Kraftstoffzuführungseinrichtung 29 verbunden. Der Lambda-Wert wird dabei mittels einer Berechnung bestimmt, entweder direkt in der Steuereinrichtung 27 oder in einer nicht gezeigten Rechnereinrichtung und dann an die Steuereinrichtung 27 weitergeleitet. Darüber hinaus ist die Steuereinrichtung 27 auch noch mit der Bestimmungseinrichtung 30 und Temperatursensoren 33 verbunden, so dass die Steuereinrichtung 27 das Brennstoffzellensystem 1 auch in Abhängigkeit der ermittelten Temperaturen/λ-Werte steuern kann.

Generell lässt sich ein Reformerbetrieb beim Betrieb des Brennstoffzellensystems 1 im wesentlichen grob in drei Betriebszustände aufteilen. Nach dem Start des Reformers 3 wird durch eine überstöchiometrische Verbrennung des Kraftstoffs in der Gemischbildungseinrichtung 10 die Reformierung gestartet. In den ersten Minuten, bevor die Brennstoffzelle 2 soweit aufgeheizt ist, dass sie Strom und damit Wasserdampf produzieren kann, werden dabei die meisten Ablagerungen in Form von Rußpartikeln erzeugt. Im stationären Betrieb des Reformers 3, werden ca. 60% des von diesem erzeugten Brenngases in der Brennstoffzelle 2 umgesetzt. Die Menge an Rezirkulationsgas, welches über die Rezirkulationsleitung 17 erneut der Gemischbildungseinrichtung 10 und damit dem Reformer 3 zugeführt wird, wird dabei automatisch in Abhängigkeit der Temperatur in der Gemischbildungseinrichtung 10 geregelt. Der Lambda-Wert wird dabei nach oben begrenzt, um die Temperatur im Katalysator 11 zu begrenzen und den bestmöglichen Wirkungsgrad der Reformierung zu erreichen Beim Betrieb der Brennstoffzelle 2 und insbesondere beim Abschalten derselben, wird die Brennstoffzelle 2 langsam durch ein Herabsetzen der Reformerleistung und eine Erhöhung der Kathodenluftmenge abgekühlt. Dafür wird ein Anteil des der Gemischbildungseinrichtung 10 zugeführten Rezirkulationsgases soweit angehoben, wie dies gerade noch einen zufrieden stellenden Reformerbetrieb erlaubt. Eine Grenze von ca. 400° sollte dabei nicht unterschritten werden. Die Erhöhung der Zuführrate an rückgeführtem Rezirkulationsgas führt dabei zu einer Abkühlung des Katalysators 11.

Durch eine Erhöhung des Lambda-Wertes, vorzugsweise auf einem Wert von 0,50 bis 0,9, kann die Temperatur des Katalysators 11 wieder angehoben werden, so dass zum einen in diesem einerseits die Rußpartikel abgebrannt und eine erforderliche Menge an Brenngas zum zumindest reduzierten Betrieb der Brennstoffzelle 2 erzeugt werden kann, zum anderen aber eine den Katalysator 11 zerstörende bzw. zumindest beeinträchtigende Temperaturgrenze, beispielsweise von ca. 950°, nicht überschritten wird. Während des Regenerationsbetriebs, bei welchem die Rußpartikel im Katalysator 11 abgebaut, insbesondere verbrannt werden, dient dabei der Wasserdampf im Rezirkulationsgas als Sauerstofflieferant. Dieser verbindet sich gemäß nachfolgender Gleichung mit dem Kohlenstoff der Ablagerungen, insbesondere der Rußpartikel, und wandelt diesen somit in Kohlendioxid um, während der Wasserstoff über die Brenngasleitung 19 dem Anodeneingang 5 zugeführt wird:

2 H₂O + C = 2 H₂ + CO₂

Als zweiter Mechanismus zur Oxidation des Kohlenstoffs der Rußpartikel fungiert dabei eine Oxidation der Rußpartikel durch den erhöhten Kohlendioxidanteil gemäß nachfolgender Gleichung:

CO₂ + C = 2 CO

Weiterhin läuft folgende Oxidationsreaktion ab, einhergehend mit der Lambda-Anhebung:

O₂ + C = CO₂

Die für den Katalysator 11 unbedingt einzuhaltenden Grenztemperatur wird dabei von einer Sensorik 32, welche mehrere Temperatursensoren 33 aufweist, überwacht.

Durch die erfindungsgemäße gleichzeitige Zuführung von Rezirkulationsgas zur Gemischbildungseinrichtung 10 und dem Anheben des Lambda-Werts kann somit eine Regeneration des Reformers 3, insbesondere des Katalysators 11, auch während des Betriebs des Brennstoffzellensystems 1 erfolgen, da eine Überhitzung des Katalysators 11 während des Abbrandvorgangs durch die Zuführung von Rezirkulationsgas vermieden werden kann. Gleichzeitig ist der Oxidatorgehalt während des Regenerationsvorgangs überwacht und so bestimmt, dass kein Sauerstoff über die Brenngasleitung 19 zum Anodeneingang 5 der Brennstoffzelle 2 gelangen und diese zerstören kann.

## Patentansprüche

1. Brennstoffzellensystem (1), insbesondere für ein Kraftfahrzeug,
- mit einer Brennstoffzelle (2) zur Stromerzeugung aus Oxidatorgas und aus Brenngas, die wenigstens einen Stromanschluss (9) aufweist,
- mit einem Reformer (3), der eine Gemischbildungseinrichtung (10) zum Mischen von Kraftstoff mit einem Oxidator und einen der Gemischbildungseinrichtung (10) nachgeschalteten Katalysator (11) zur Brenngaserzeugung aus dem Kraftstoff-Oxidator-Gemisch enthält und einen Brenngasausgang (20) aufweist,
- mit einer Brenngasleitung (19), die den Brenngasausgang (20) mit einem Anodeneingang (5) der Brennstoffzelle (2) verbindet,
**gekennzeichnet durch**
- eine Rezirkulationsleitung (17) zum Rückführen von Anodenabgas in die Gemischbildungseinrichtung (10) des Reformators (3),
- eine Bestimmungseinrichtung (30) zur Bestimmung eines Lambda-Wertes,
- und eine Steuereinrichtung (27), die so ausgestaltet ist, dass sie während eines Regenerationsbetriebes einen Anteil an in den Reformer (3) rückgeführtem Rezirkulationgas und den Lambda-Wert erhöht.

2. Brennstoffzellensystem nach Anspruch 1,
**dadurch gekennzeichnet,**
**dass** die Brennstoffzelle (2) als Hochtemperatur-Brennstoffzelle ausgebildet ist.

3. Brennstoffzellensystem nach Anspruch 1 oder 2,
**dadurch gekennzeichnet,**
**dass** die Steuerungseinrichtung (27) so ausgebildet ist, dass sie den Lambda-Wert während der Regenerierungsphase auf größer als 0,40 oder größer als 0,50 anhebt.

4. Brennstoffzellensystem nach einem der Ansprüche 1 bis 3,
**dadurch gekennzeichnet,**
**dass** eine Wärmeübertragereinrichtung (31) vorgesehen ist, welche in einer Kathodenluftzufuhrleitung (4) der Brennstoffzelle (2) angeordnet ist.

5. Brennstoffzellensystem nach Anspruch 4,
**dadurch gekennzeichnet,**
**dass** die Rezirkulationsleitung (17) von einer Anodenabgasleitung (18) über die Wärmeübertragereinrichtung (31) zur Gemischbildungseinrichtung (10) des Reformers (3) führt.

6. Brennstoffzellensystem nach einem der Ansprüche 1 bis 5,
**dadurch gekennzeichnet,**
**dass** zwischen der Gemischbildungseinrichtung (10) und/oder stromab des Katalysators (11) ein Temperatursensor (33) angeordnet ist.

7. Brennstoffzellensystem nach einem der Ansprüche 1 bis 6,
**dadurch gekennzeichnet,**
**dass** das Brennstoffzellensystem (1) so ausgebildet ist, dass ein Regenerieren des Katalysators (11) und/oder der Brennstoffzelle (2) während des Betriebs des Brennstoffzellensystems (1) erfolgen kann.

8. Verfahren zum Regenerieren eines Brennstoffzellensystems
- mit einer Brennstoffzelle (2) zur Stromerzeugung aus Oxidatorgas und aus Brenngas, die wenigstens einen Stromanschluss (9) aufweist,
- mit einem Reformer (3), der eine Gemischbildungseinrichtung (10) zum Mischen von Kraftstoff mit einem Oxidator und einen der Gemischbildungseinrichtung (10) nachgeschalteten Katalysator (11) zur Brenngaserzeugung aus dem Kraftstoff-Oxidator-Gemisch enthält und einen Brenngasausgang (20) aufweist,
- mit einer Brenngasleitung (19), die den Brenngasausgang (20) mit einem Anodeneingang (5) der Brennstoffzelle (2) verbindet,
- mit einer Rezirkulationsleitung (17) zum Rückführen von Anodenabgas in die Gemischbildungseinrichtung (10) des Reformators (3),
insbesondere nach einem der Ansprüche 1 bis 7,
**dadurch gekennzeichnet,**
**dass** ein Anteil an, vom Anodenausgang (6) der Brennstoffzelle (2) stammendem und in die Gemischbildungseinrichtung (10) eingeleitetem Rezirkulationsgas und ein Lambda-Wert angehoben werden.

9. Verfahren nach Anspruch 8,
**dadurch gekennzeichnet,**
**dass** der Lambda-Wert während des Regenerationsprozesses auf größer als 0,40 oder größer als 0,50 angehoben wird.

10. Verfahren nach Anspruch 8 oder 9,
**dadurch gekennzeichnet,**
**dass** dem Rezirkulationsgas Wärme entzogen wird.

## Claims

1. A fuel cell system (1), particularly for a motor vehicle,
- with a fuel cell (2) for power generation from oxidant gas and from fuel gas having at least one power connection (9),
- with a reformer (3) containing a mixture forming device (10) for the mixing of fuel with an oxidant and a catalytic converter (11) connected downstream of the mixture forming device (10) for fuel gas generation from the fuel-oxidant mixture and having a fuel gas outlet (20),
- with a fuel gas line (19) connecting the fuel gas outlet (20) with an anode inlet (5) of the fuel cell (2),
- **characterized by** a recirculation line (17) for returning anode waste gas into the mixture forming device (10) of the reformer (3),
- and by a determination device (30) for determining a lambda value,
- and by a control device (27) which is configured so that during a regeneration operation it increases a portion of recirculation gas returned into the reform (3) and the lambda value.

2. The fuel cell system according to claim 1, **characterized in that** the fuel cell (2) is designed as high-temperature fuel cell.

3. The fuel cell system according to claim 1 or 2, **characterized in that** the control device (27) is designed so that it increases the lambda value during the regeneration phase to greater than 0.40 or greater than 0.50.

4. The fuel cell system according to any one of the claims 1 to 3, **characterized in that** a heat transfer device (31) is provided, which is arranged in a cathode air feed line (4) of the fuel cell (2).

5. The fuel cell system according to claim 4, **characterized in that** the recirculation line (17) leads from an anode waste gas line (18) via the heat transfer device in (31) to the mixture forming device (10) of the reformer (3).

6. The fuel cell system according to any one of the claims 1 to 5, **characterized in that** between the mixture forming device (10) and/or downstream of the catalytic converter (11) a temperature sensor (33) is arranged.

7. The fuel cell system according any one of the claims 1 to 6, **characterized in that** the fuel cell system (1) is designed so that regenerating of the catalytic converter (11) and/or of the fuel cell (2) can take place during the operation of the fuel cell system (1).

8. A method for regenerating a fuel cell system
- with a fuel cell (2) for the power generation from oxidant gas and from fuel gas having at least one power connection (9),
- with a reformer (3) containing a mixture forming device (10) for the mixing of fuel with an oxidant and a catalytic converter (11) connected downstream of the mixture forming device (10) for the fuel gas generation from the fuel-oxidant mixture and comprising a fuel gas outlet (20),
- with a fuel gas line (19) connecting the fuel gas outlet (20) with an anode inlet (5) of the fuel cell (2),
- with a recirculation line (17) for returning anode waste gas into the mixture forming device (10) of the reformer (3), particularly according to any one of the claims 1 to 7, **characterized in that** a portion of recirculation gas originating from the anode outlet (6) of the fuel cell (2) and fed into the mixture forming device (10) and a lambda value are raised.

9. The method according to claim 8, **characterized in that** the lambda value during the regeneration process is raised to greater than 0.40 or greater than 0.50.

10. The method according to claim 8 or 9, **characterized in that** heat is extracted from the recirculation gas.

## Revendications

1. Système de cellules de combustible (1), en particulier pour un véhicule automobile, comprenant
- une cellule de combustible (2) pour la production de courant à partir de gaz oxydant et de gaz combustible, qui présente au moins un raccordement électrique (9),
- un reformeur (3), qui contient un dispositif de formation de mélange (10) pour le mélange de carburant avec un oxydant et un catalyseur (11) placé en aval du dispositif de formation de mélange (10) pour la production de gaz combustible à partir du mélange carburant-oxydant et présente une sortie de gaz combustible (20),
- une conduite de gaz combustible (19), qui relie la sortie de gaz combustible (20) à une entrée d'anode (5) de la cellule de combustible (2),
**caractérisé par**
- une conduite de recirculation (17) pour le recyclage de gaz brûlé d'anode dans le dispositif de formation de mélange (10) du reformeur (3),
- un dispositif de détermination (30) pour la détermination d'une valeur lambda,
- et un dispositif de commande (27), qui est conçu de telle sorte qu'il fait augmenter pendant un cycle de régénération une fraction du gaz de recirculation recyclé dans le reformeur (3) et la valeur lambda.

2. Système de cellules de combustible selon la revendication 1,
**caractérisé en ce que** la cellule de combustible (2) est conçue comme cellule de combustible à haute température.

3. Système de cellules de combustible selon la revendication 1 ou 2,
**caractérisé en ce que** le dispositif de commande (27) est conçu de telle sorte qu'il fait augmenter la valeur lambda pendant la phase de régénération jusqu'à une valeur supérieure à 0,40 ou supérieure à 0,50.

4. Système de cellules de combustible selon l'une quelconque des revendications 1 à 3,
**caractérisé en ce qu'**il est prévu un dispositif de transfert de chaleur (31) qui est disposé dans une conduite d'arrivée d'air de cathode (4) de la cellule de combustible (2).

5. Système de cellules de combustible selon la revendication 4,
**caractérisé en ce que**
la conduite de recirculation (17) va d'une conduite de gaz brûlé d'anode (18) au dispositif de formation de mélange (10) du reformeur (3) via le dispositif de transfert de chaleur (31).

6. Système de cellules de combustible selon l'une quelconque des revendications 1 à 5,
**caractérisé en ce qu'**un capteur de température (33) est disposé entre le dispositif de formation de mélange (10) et/ou en aval du catalyseur (11).

7. Système de cellules de combustible selon l'une quelconque des revendications 1 à 6,
**caractérisé en ce que**
le système de cellules de combustible (1) est conçu de telle sorte qu'une régénération du catalyseur (11) et/ou de la cellule de combustible (2) peut intervenir pendant le fonctionnement du système de cellules de combustible (1).

8. Procédé pour régénérer un système de cellules de combustible comprenant
- une cellule de combustible (2) pour la production de courant à partir de gaz oxydant et de gaz combustible, qui présente au moins un raccordement électrique (9),
- un reformeur (3), qui contient un dispositif de formation de mélange (10) pour le mélange de carburant avec un oxydant et un catalyseur (11) monté en aval du dispositif de formation de mélange (10) pour la production de gaz combustible à partir du mélange carburant-oxydant et présente une sortie de gaz combustible (20),
- une conduite de gaz combustible (19), qui relie la sortie de gaz combustible (20) à une entrée d'anode (5) de la cellule de combustible (2),
- une conduite de recirculation (17) pour le recyclage de gaz brûlé d'anode dans le dispositif de formation de mélange (10) du reformeur (3),
en particulier selon l'une quelconque des revendications 1 à 7,
**caractérisé en ce que**
une fraction de gaz de recirculation provenant de la sortie d'anode (6) de la cellule de combustible (2) et introduit dans le dispositif de formation de mélange (10) et une valeur lambda sont augmentées.

9. Procédé selon la revendication 8,
**caractérisé en ce que**
la valeur lambda est augmentée pendant le processus de régénération jusqu'à une valeur supérieure à 0,40 ou 0,50.

10. Procédé selon la revendication 8 ou 9,
**caractérisé en ce que** de la chaleur est prélevée sur le gaz de recirculation.
